Europäisches Patentamt

**European Patent Office**

Office européen des brevets

(11) Veröffentlichungsnummer: **0 272 451 B1**

(12) **EUROPÄISCHE PATENTSCHRIFT**

(45) Veröffentlichungstag der Patentschrift: **10.07.91**

(21) Anmeldenummer: **87116900.9**

(22) Anmeldetag: **17.11.87**

(51) Int. Cl.5: **F28F 21/04, C04B 41/84**

(54) **Verfahren zum Abdichten keramischer Wärmetauscher.**

(30) Priorität: **21.11.86 DE 3639880**
**26.05.87 DE 3717670**

(43) Veröffentlichungstag der Anmeldung:
**29.06.88 Patentblatt 88/26**

(45) Bekanntmachung des Hinweises auf die
Patenterteilung:
**10.07.91 Patentblatt 91/28**

(84) Benannte Vertragsstaaten:
**DE FR GB NL**

(56) Entgegenhaltungen:
**WO-A-80/00021**    **DE-A- 2 019 678**
**DE-A- 3 136 253**    **DE-A- 3 312 911**
**DE-A- 3 327 659**    **FR-A- 2 579 602**
**GB-A- 2 002 738**

**PATENT ABSTRACTS OF JAPAN, Band 10,**
**Nr. 299 (M-524)[2355], 11. Oktober 1986; &**
**JP-A-61 110 896 (KAWASAKI HEAVY IND**
**LTD) 29-05-1986**

(73) Patentinhaber: **Hoechst CeramTec Aktienge-**
**sellschaft**
**Wilhelmstrasse 14**
**W-8672 Selb(DE)**

(72) Erfinder: **Linsner, Otmar**
**Südring 46**
**W-8670 Hof/Saale(DE)**
Erfinder: **Berroth, Karl, Dr.**
**Ludwigstrasse 42**
**W-8672 Selb(DE)**

(74) Vertreter: **Isenbruck, Günter, Dr. et al**
**HOECHST AKTIENGESELLSCHAFT Zentrale**
**Patentabteilung Postfach 80 03 20**
**W-6230 Frankfurt/Main 80(DE)**

EP 0 272 451 B1

**Beschreibung**

Die vorliegende Erfindung betrifft ein Verfahren zum Abdichten von keramischen Wärmetauschern aus Siliziumnitrid mit engen Querschnitten. Solche Wärmetauscher lassen sich nach mehreren Verfahren, z.B. ausgehend von einem isostatisch gepreßten keramischen Grünkörper herstellen. Dabei werden von zwei planparallelen Seiten her mehrere nebeneinander angeordnete, zueinander parallel verlaufende Ausnehmungen eingefräst, wobei die Ausnehmungen der einen Seite gegenüber den Ausnehmungen der anderen Seite um einen halben Abstand zwischen den Ausnehmungen einer Seite versetzt sind und zwischen die Ausnehmungen der Gegenseite eingreifen. Die Ausnehmungen werden an ihren Stirnseiten mittels keramischer Masse gasdicht verschlossen und auf den planparallelen Seiten von Deckwandungen aus Keramik so abgedeckt, daß zumindest im an den Stirnseiten gelegenen Deckenbereich Zu- und Abströmöffnungen für die Medien offen bleiben. Im Anschluß daran wird der Grünkörper gebrannt (vgl. DE-AS 27 07 290). Man kann auch Wärmetauscher aus keramischen Folien aufbauen, wobei unterschiedliche Strömungskanäle in die Folie gestanzt oder geprägt werden und anschließend zueinander passende Folienabschnitte mit einem Laminierhilfsmittel verbunden werden. Anschließend wird der erhaltene Wärmetauscherblock zweistufig gebrannt. Als Werkstoffe eignen sich u. a. Siliziumnitrid, Siliziumcarbid und Cordierit (vgl. DE-OS 31 36 253). Nachteilig an diesen bekannten keramischen Wärmetauschern ist, daß die Materialien zum Teil porös sind und dann keinen hohen Anforderungen bezüglich Gas- und Flüssigkeitsdichtheit genügen. Dies gilt insbesondere für reaktionsgebundenes Siliziumnitrid (RBSN). Es ist auch schon ein Verfahren bekannt geworden, um Gegenstände aus Siliziumcarbid, die freies Silizium enthalten, mit einer undurchlässigen Glasur zu versehen (DE-OS 33 14 221). Das angegebene Verfahren erfordert jedoch mehrere Schritte und ist auf Siliziumcarbid-Körper, deren Porenvolumen mit metallischem Silizium in wesentlichen gefüllt ist, beschränkt. Ferner besteht die Gefahr, daß die anorganische Glasur bei thermischer Wechselbeanspruchung abplatzt. Andere Verfahren der Abdichtung von Siliziumnitrid sind beschrieben in DE-AS 26 35 167 und DE-OS 23 51 162. Nachteilig ist dabei, daß das Siliziumnitrid erneut auf hohe Temperaturen erhitzt werden muß. Keramische Wärmetauscher können z.B. als Gegenstrom-Wärmetauscher ausgebildet werden, vornehmlich für den Austausch von Wärmemengen zwischen gasförmigen und flüssigen Medien. Sie können auch als Kreuzstrom-Wärmetauscher ausgebildet werden, vornehmlich für den Wärmeaustausch zwischen gasförmigen Medien. Die freien Querschnitte betragen i.a. etwa 0,8-10 mm, vorzugsweise 1,6 bis 4,8 mm.

Aus der WO-A-80/00021 ist ein Verfahren zum Abdichten von keramischen Körper bekannt, bei dem ein flüssiges Kunstharz in den Körper eingefüllt wird und in dem Körper ein Druck erzeugt wird, so daß das Kunstharz in die Poren des Keramikkörpers eindringt. Das überschüssige Harz wird entfernt und der Rest thermisch zersetzt.

Aus DE-A-20 19 678 ist ein Methylsiloxan-Harz zum Abdichten von porösen Keramikschichten bekannt, das aushärtet. Es wird in dieser Literaturstelt nicht erwähnt, daß Methylsiloxan-Harze beim thermischen Zersetzen zu Siliziumcarbid zerfallen würden.

Es bestand daher die Aufgabe, ein Verfahren zu finden, mit dem es möglich ist, keramische Wärmetauscher aus $Si_3N_4$ unterschiedlichster Geometrie, insbesondere mit engen freien Querschnitten abzudichten, das die Nachteile des Standes der Technik nicht aufweist.

Es wurde nun ein Verfahren zum Abdichten von keramischen Wärmetauschern aus Siliziumnitrid mit engen Querschnitten gefunden, das dadurch gekennzeichnet ist, daß man auf der einen (später kalten) Seite des Wärmetauschers ein flüssiges Silikonharz einfüllt und dort einen Druck erzeugt, der höher ist als auf der anderen (später heißen) Seite des Wärmetauschers, man das überschüssige Harz entfernt und das Silikonharz aushärtet, aber es nicht thermisch zu Siliziumcarbid oder Siliziumnitrid zersetzt. Es ist dabei bevorzugt, daß man auf der später heißen Seite des Wärmetauschers Vakuum anlegt. Man kann auch die kalte Seite mit Siliconharz füllen und an ihr einen Druck von bis zu 2 bar anlegen, und diesen Druck für einige Zeit belassen, ohne auf der anderen Seite Vakuum anzulegen.

Es ist vorteilhaft, die beim Reaktionsbrand entstandenen Whisker aus Siliziumnitrid vor der Behandlung mit Kunstharz mechanisch zu entfernen, um die Durchströmbarkeit enger Querschnitte (unter 2 mm) zu verbessern. Hierzu wird eine Schleifmittel-Suspension während etwa 30 bis 240 Minuten durch den Austauscher gepumpt. Dabei ist ein leichter Überdruck bis 0,5 bar vorteilhaft. Der Gehalt der Suspension an Schleifmitteln, insbesondere an Siliziumcarbid, beträgt 5 bis 20 Gew.-%. Um das Absetzen des Schleifmittels zu verhindern, ist es sinnvoll, ein Mittel zuzugeben, das die Viskosität der Suspension erhöht, beispielsweise Natrium-Alginat oder Ammonium-Alginat in Mengen von bis zu 1,5 Gew.-%.

Als Schleifmittel kommen Aluminiumoxid, Borcarbid, Quarz und insbesondere Siliziumcarbid in Frage. Diese Verbindungen sollen vorzugsweise in feinverteilter Form vorliegen, insbesondere in Form von Pulvern mit Korngrößen von maximal 0,5 mm.

Nach der mechanischen Reinigung wird der Wärmetauscher mit Wasser gespült und bei Temperaturen von bis zu 300° C getrocknet. Das flüssige Silikonharz wird in die mechanisch gereinigte (später kalte) Seite des Wärmetauschers eingefüllt und Vakuum auf der anderen Seite bzw. Überdruck an der Silikonharz-Seite angelegt. Die Anwendung von Vakuum beim Imprägnieren bietet jedoch arbeitstechnische Vorteile.

Das verwendete Silikon-Harz ist insbesondere ein Methylsiloxan-Harz. Verwendbar sind z. B. Siliconharze mit Dimethylsiloxan- oder Phenylmethylsiloxan-Gruppen. Diese Harze können durch Temperaturerhöhung katalytisch oder oxidativ gehärtet werden. Es ist bevorzugt, wenn die eingesetzten Silikon-Harze zunächst dünnflüssig sind und erst nach Eindringen in die poröse Wandstruktur festwerden.

Verwendbar sind ferner wäßrige Lösungen von Kali- oder Natriummethylsiliconat. Hier kann das Aushärten nach Eindringen in die poröse Wand durch Einwirkung von Säure (z. B. Kohlensäure der Luft) erreicht werden.

Das Silikon-Harz kann auch 0 bis 15, vorzugsweise 2 - 12 Gew.-% Zinkstaub oder Aluminiumstaub enthalten. Durch diesen Zusatz wird die Korrosionsbeständigkeit erhöht und die Wasserdampfdurchlässigkeit des Silikonharzes verringert. Das Kunstharz wird vorteilhafterweise thermisch stufenweise ausgehärtet. Die erhaltenen Wärmetauscher sind durch die Behandlung mit Harz dicht, sofern keine Groblecks vorhanden sind und sie können auf der heißen Seite thermisch im Rahmen der Temperaturstabilität des Werkstoffs belastet werden, ohne daß das Silikonharz thermisch zersetzt wird. Auf der kalten Seite sollte eine Temperatur von 250° C nicht überschritten werden. Durch die Behandlung mit Silikonharz werden ferner die mechanischen Eigenschaften verbessert. Man kann mit dem angegebenen Verfahren auch andere keramische Gegenstände abdichten, die sich auf mindestens einer Seite mit Vakuum oder Druck beaufschlagen lassen, z. B. Platten oder Rohre, sofern die Gegenstände später nicht allzu hohen Temperaturen ausgesetzt werden.

Die Erfindung wird durch das Beispiel näher erläutert.

Beispiel:

Durch einen Wärmetauscher aus $Si_3N_4$ (258 x 16 x 145 mm; 23 kalte Kanäle, 22 heiße Kanäle; Plattenabstand 1,6 mm) wird eine Suspension von 12 Gew.-% SiC (Körnung SiC 0,1 - 0,2 mm) in einer wässrigen 0,2 %igen Na-alginatlösung, mit einem Überdruck von 0,4 bar 200 min durch die später kalte Seite des Wärmetauschers, gepumpt. Hierzu wird eine Schlauchpumpe über Abdichtungen, die an die Öffnungen (der später kalten Seite) des Wärmetauschers angepaßt sind, angeschlossen. Damit wird erreicht, daß alle Kanäle gleichmäßig durchströmt werden und aus allen Kanälen der $Si_3N_4$ - Whiskerbelag entfernt wird.

Anschließend wird solange mit destilliertem Wasser gespült bis die Schleifmittelsuspension vollständig entfernt ist. Dabei wird die Strömungsrichtung geändert. Nun wird der Wärmetauscher bei 150°-300° C mehrere Stunden getrocknet.

Die zum Imprägnieren eingesetzte Siliconharz/Zn-Suspension (8 Gew.-% Zn) wird zur homogenen Verteilung und der weiteren Zerkleinerung des Zn-Pulvers 12 h in einer Kugelmühle mit $Al_2O_3$-Kugeln vermahlen. Danach liegt die Korngröße unter 60 $\mu$m.

An dem getrockneten Wärmetauscher wird auf der späteren heißen Seite Vakuum angelegt und die erhaltene Imprägnierlösung 30 min durch die später kalte Seite gepumpt. Auch dabei wird auf die gleichmäßige Durchströmung aller angeschlossenen Kanäle geachtet.

Nach dem Entfernen des überschüssigen Harzes wird der Wärmetauscher in einen Trockenschrank gestellt und das Harz bei 250° C ausgehärtet. Die innere behandelte Oberfläche des Wärmetauschers ist mit einer bis zu 30 mm dicken Schicht überzogen, die das gesamte Zink enthält und in den Poren der Keramik verankert ist.

Die Gasdurchlässigkeit des unbehandelten Wärmetauschers betrug $10^{-6}$ kg Luft/s $\cdot$ cm² bei einer Druckdifferenz von 1 bar. Unter gleichen Bedinungen betrug die Gasdurchlässigkeit des abgedichteten wärmetauschers $10^{-6}$ kg Luft/s $\cdot$ cm².

**Ansprüche**

1. Verfahren zum Abdichten von keramischen Wärmetauschern aus Siliziumnitrid mit engen Querschnitten, dadurch gekennzeichnet, daß man auf der einen (später kalten) Seite des Wärmetauschers ein flüssiges Silikonharz einfüllt und dort einen Druck erzeugt, der höher ist als auf der anderen (später heißen) Seite des Wärmetauschers, man das überschüssige Harz entfernt und das Silikonharz aushärtet, aber es nicht thermisch zu Siliziumcarbid oder Siliziumnitrid zersetzt.

2. Verfahren nach Anspruch 1, dadurch gekennzeichnet, daß das Silikonharz ein Methylsiloxan-Harz ist.

3. Verfahren nach Anspruch 1 oder 2, dadurch gekennzeichnet, daß das Silikonharz Zinkstaub enthält.

4. Verfahren nach Anspruch 1, dadurch gekennzeichnet, daß man das Silikonharz thermisch aushärtet.

5. Verfahren nach Anspruch 1, dadurch gekennzeichnet, daß man vor der Behandlung mit dem flüssigen Silikonharz eine Suspension von fein verteiltem Schleifmittel in einer flüssigen Phase durch die später kalte Seite des Wärmetauschers pumpt, bis die beim Reaktionsbrand entstandenen Whisker aus Siliciumnitrid mechanisch entfernt sind und man den Wärmetauscher spült und trocknet.

6. Verfahren nach Anspruch 5, dadurch gekennzeichnet, daß die Suspension noch ein Mittel zur Erhöhung ihrer Viskosität enthält.

7. Verfahren nach Anspruch 5, dadurch gekennzeichnet, daß als Schleifmittel fein verteiltes Siliciumcarbid verwendet wird.

8. Verfahren nach Anspruch 7, dadurch gekennzeichnet, daß die Teilchen der Siliciumcarbid-Suspension maximal 0,5 mm groß sind.

9. Verfahren nach Anspruch 1, dadurch gekennzeichnet, daß man nach Einfüllen des Harzes auf der anderen (später heißen) Seite des Wärmetauschers Vakuum anlegt.

## Claims

1. A process for sealing a ceramic heat exchanger consisting of silicon nitride, having narrow cross-sections, which comprises filling one side (which later will be the cold side) of the heat exchanger with a liquid silicone resin and generating there a pressure higher than that on the other side (which later will be the hot side) of the heat exchanger, removing the excess resin and fully curing the silicone resin but not decomposing it thermally to give silicon carbide or silicon nitride.

2. The process as claimed in claim 1, wherein the silicone resin is a methylsiloxane resin.

3. The process as claimed in claim 1 or 2, wherein the silicone resin contains zinc dust.

4. The process as claimed in claim 1, wherein the silicone resin is cured thermally.

5. The process as claimed in claim 1, which comprises pumping, before the treatment with the liquid silicone resin, a suspension of finely disperse abrasive in a liquid phase through that side of the heat exchanger which later will be the cold side, until the silicon nitride whiskers formed on reaction firing have been mechanically removed, and rinsing and drying the heat exchanger.

6. The process as claimed in claim 5, wherein the suspension also contains an agent for increasing the viscosity thereof.

7. The process as claimed in claim 5, wherein the abrasive used is finely disperse silicon carbide.

8. The process as claimed in claim 7, wherein the particles of the silicon carbide suspension have a size of at most 0.5 mm.

9. The process as claimed in claim 1, wherein, after the resin has been filled in, vacuum is applied to the other side (which later will be the hot side) of the heat exchanger.

## Revendications

1. Procédé pour étanchéifier des échangeurs de chaleur en nitrure de silicium céramique présentant d'étroites sections transversales, procédé caractérisé en ce qu'on introduit d'un côté (ultérieurement froid) de l'échangeur de chaleur une résine de silicone liquide et l'on y produit une pression supérieure à celle appliquée de l'autre côté (ultérieurement chaud) de l'échangeur de chaleur, on enlève l'excès de résine et l'on fait durcir la résine de silicone, mais on ne la soumet pas à décomposition thermique donnant du carbure de silicium ou du nitrure de silicium.

2. Procédé selon la revendication 1, caractérisé en ce que la résine de silicone est une résine de méthylsiloxane.

3. Procédé selon la revendication 1 ou 2, caractérisé en ce que la résine de silicone contient de la poussière de zinc.

4. Procédé selon la revendication 1, caractérisé en ce qu'on soumet la résine de silicone à un durcissement par voie thermique.

5. Procédé selon la revendication 1, caractérisé en ce qu'avant de traiter par la résine liquide de silicone, on fait passer par pompage une suspension d'un abrasif, finement divisé, dans une phase liquide, par le côté ultérieurement froid de l'échangeur de chaleur jusqu'à élimination mécanique des trichites de nitrure de silicium résultant de ce genre de réaction, puis l'on rince et sèche l'échangeur de chaleur.

6. Procédé selon la revendication 5, caractérisé en ce que la suspension contient encore un produit pour en augmenter la viscosité.

7. Procédé selon la revendication 5, caractérisé en ce qu'on utilise comme abrasif du carbure de silicium finement divisé.

8. Procédé selon la revendication 7, caractérisé en ce que les particules de la suspension de carbure de silicium ont au maximum 0,5 mm de grosseur.

9. Procédé selon la revendication 1, caractérisé en ce qu'après l'introduction de la résine, on applique une dépression sur l'autre côté (ultérieurement chaud) de l'échangeur de chaleur.